# EUROPÄISCHE PATENTANMELDUNG

(11) **EP 4 556 753 A1**
(43) Veröffentlichungstag der Anmeldung: **21.05.2025**
(21) Anmeldenummer: 24203508.7
(22) Anmeldetag: 30.09.2024
(51) Int. Cl.: F16H 9/18, A01D 69/06, A01F 12/56

(54) **SELBSTFAHRENDE LANDWIRTSCHAFTLICHE ARBEITSMASCHINE**

(30) Priorität: 17.11.2023 DE 102023132127
(71) Anmelder: CLAAS Selbstfahrende Erntemaschinen GmbH, 33428 Harsewinkel (DE)
(72) Erfinder: Große-Hündfeld, Max, 48155 Münster (DE)
(74) Vertreter: CLAAS Gruppe

(57) **Zusammenfassung**

Die vorliegende Erfindung betrifft eine selbstfahrende landwirtschaftliche Arbeitsmaschine (1), die mehrere Arbeitsorgane (8, 13) aufweist, die durch eine Zugmitteltriebe umfassende Antriebsanordnung, die zumindest einen Variator (16) zur stufenlosen Veränderung eines Übersetzungsverhältnisses umfasst, angetrieben sind, wobei der zumindest eine Variator (16) durch ein auf einer Antriebswelle (17) angeordnetes Antriebspaket (18), ein auf einer Abtriebswelle (19) angeordnetes Abtriebspaket (20) sowie einen das Antriebspaket (18) und das Abtriebspaket (20) umschlingenden Variatorriemen gebildet ist, wobei dem zumindest einen Variator (16) eine ringförmige Auswuchtvorrichtung (21) drehfest zugeordnet ist, welche mindestens zwei kugelförmige, innerhalb der Auswuchtvorrichtung (21) auf einer Kreisbahn relativbewegliche Gewichte (28) umfasst.

## Beschreibung

Die vorliegende Erfindung betrifft eine selbstfahrende landwirtschaftliche Arbeitsmaschine gemäß dem Oberbegriff des Anspruches 1.

Eine selbstfahrende landwirtschaftliche Arbeitsmaschine der eingangs genannten Art ist aus der DE 10 2013 103 450 A1 bekannt. Die darin beschriebene selbstfahrende landwirtschaftliche Arbeitsmaschine weist mehrere Arbeitsorgane auf, die durch eine Zugmitteltriebe umfassende Antriebsanordnung, die zumindest einen Variator zur stufenlosen Veränderung eines Übersetzungsverhältnisses umfasst, angetrieben sind, wobei der zumindest eine Variator durch ein auf einer Antriebswelle angeordnetes Antriebspaket, ein auf einer Abtriebswelle angeordnetes Abtriebspaket sowie einen das Antriebspaket und das Abtriebspaket umschlingenden Variatorriemen gebildet ist.

Ein in die Arbeitsmaschine verbauter Variator muss bedingt durch Montagetoleranzen hervorgerufene Restunwuchten im zusammengebauten Zustand initial ausgewuchtet werden. Beim stufenlosen Verstellen der Drehzahlen im Betrieb der Arbeitsmaschine werden die Variatorscheiben gegeneinander verdreht. Die bei der initialen Auswuchtung des zusammengebauten Variators berücksichtigten Unwuchten der einzelnen Variatorscheiben dabei verändern ihre räumliche Position. Hierdurch treten zu jeder Drehzahl, d.h. der Stellung der Variatorscheiben zueinander, unterschiedliche Wuchtzustände ein. Die für einen ruhigen Maschinenlauf notwendige Wuchtgüte kann nicht erreicht werden.

Ausgehend vom vorstehend genannten Stand der Technik liegt der Erfindung die Aufgabe zugrunde, eine landwirtschaftliche Arbeitsmaschine der eingangs genannten Art weiterzubilden, welche sich durch einen ruhigeren Maschinenlauf über das Drehzahlspektrum des zumindest einen Variators hinweg auszeichnet.

Diese Aufgabe wird erfindungsgemäß durch eine landwirtschaftliche Arbeitsmaschine mit den Merkmalen des Anspruches 1 gelöst. Vorteilhafte Weiterbildungen sind Gegenstand der abhängigen Ansprüche.

Gemäß dem Anspruch 1 wird eine selbstfahrende landwirtschaftliche Arbeitsmaschine vorgeschlagen, die mehrere Arbeitsorgane aufweist, die durch eine Zugmitteltriebe umfassende Antriebsanordnung, die zumindest einen Variator zur stufenlosen Veränderung eines Übersetzungsverhältnisses umfasst, angetrieben sind, wobei der zumindest eine Variator durch ein auf einer Antriebswelle angeordnetes Antriebspaket, ein auf einer Abtriebswelle angeordnetes Abtriebspaket sowie einen das Antriebspaket und das Abtriebspaket umschlingenden Variatorriemen gebildet ist. Erfindungsgemäß ist vorgesehen, dass dem zumindest einen Variator eine ringförmige Auswuchtvorrichtung drehfest zugeordnet ist, welche mindestens zwei kugelförmige, innerhalb der Auswuchtvorrichtung auf einer Kreisbahn relativbewegliche Gewichte umfasst. Die innerhalb der Auswuchtvorrichtung auf einer Kreisbahn relativbeweglichen kugelförmigen Gewichte ordnen sich im überkritischen Drehzahlbereich stets gegenüber der sich einstellenden Unwucht an, und gleichen diese aus. Die ringförmige Auswuchtvorrichtung ermöglicht nach dem Durchfahren der kritischen Resonanzdrehzahl ein selbststellendes Ausgleichen der verbleibenden Unwucht in der Ebene der ringförmigen Auswuchtvorrichtung.

Durch die Auswuchtvorrichtung lässt sich eine Reduzierung von Schwingungen erreichen, die auf die Karosserie der Arbeitsmaschine übertragbar sind. Ebenso führt die durch die Auswuchtvorrichtung erreichbare Wuchtgüte zu einer Reduzierung der Geräuschemission. Ein weiterer Vorteil ergibt sich daraus, dass höhere Drehzahlen darstellbar sind, ohne die damit üblicherweise verbundenen höheren Belastungen von Karosserie und Lagerstellen.

Bevorzugt kann die Auswuchtvorrichtung am Abtriebspaket des zumindest einen Variators angeordnet sein. Das Abtriebspaket kann auf der durch den Variator anzutreibenden Welle angeordnet sein.

Insbesondere kann das Abtriebspaket eine auf der Abtriebswelle angeordnete Festscheibe und zumindest eine gegenüber der Festscheibe axialverschiebbare Losscheibe umfassen, deren axialer Verstellweg durch eine endseitig auf der Abtriebswelle angeordnete Einstellscheibe einstellbar ist.

Weiterhin kann die Auswuchtvorrichtung auf der Einstellscheibe des zumindest einen Variators angeordnet sein. Die mit der Verstellung der zumindest einen Losscheibe zur Drehzahlveränderung verbundenen, sich einstellenden unterschiedlichen Wuchtzustände lassen sich durch diese Anordnung der Auswuchtvorrichtung selbsttätig kompensieren.

Für eine zentrierte Anordnung der Auswuchtvorrichtung am Abtriebspaket kann die Einstellscheibe einen umlaufenden radialen Absatz aufweisen, mittels dem die Auswuchtvorrichtung zentriert auf der Einstellscheibe angeordnet ist.

Insbesondere kann die Auswuchtvorrichtung eine umlaufende ringförmige Kammer aufweisen, in der die mindestens zwei kugelförmigen Gewichte relativbeweglich angeordnet sind. Die ringförmige Kammer begrenzt die Relativbewegung der mindestens zwei kugelförmigen Gewichte auf eine Lageveränderung in Umgangsrichtung der Auswuchtvorrichtung.

Bevorzugt kann die Auswuchtvorrichtung ein ringförmiges Bauteil zur Befestigung auf der Einstellscheibe umfassen, wobei das ringförmige Bauteil einen flanschförmigen Abschnitt aufweist, auf dem ein zur Abtriebswelle konzentrischer Laufbahnabschnitt für die mindestens zwei kugelförmigen Gewichte ausgebildet ist. Der Laufbahnabschnitt kann einen Teil eines Innenlagerrings ausbilden, welcher der Führung der kugelförmigen Gewichte dient.

Dazu können die auf dem Laufbahnabschnitt angeordneten kugelförmigen Gewichte durch einen Außenlagerring geführt sein, wobei der Außenlagerring durch Formschluss und/oder Stoffschluss am ringförmigen Bauteil fixiert sein kann.

Gemäß einer bevorzugten Weiterbildung kann die Anzahl der Gewichte derart begrenzt sein, dass nebeneinanderliegende Gewichte einen Kreisbogen mit einer Länge beschreiben, der kleiner als die Hälfte des Umfangs der ringförmigen Kammer, vorzugsweise kleiner als ein Viertel des Umfangs der Kammer, ist.

Insbesondere kann die Auswuchtvorrichtung einen Deckel umfassen, der mit dem ringförmigen Bauteil lösbar verbunden ist.

Bevorzug kann der Deckel innenseitig einen umlaufenden Laufbahnabschnitt aufweisen, welcher konkav ausgeführt ist. Der innenseitig angeordnete Laufbahnabschnitt ist komplementär zum Laufbahnabschnitt auf dem flanschförmigen Abschnitt des ringförmigen Bauteils angeordnet und ausgebildet.

Insbesondere kann die landwirtschaftliche Arbeitsmaschine als ein Mähdrescher mit einer Dreschvorrichtung und einer Abscheidevorrichtung als Arbeitsorganen ausgeführt sein, wobei die Dreschvorrichtung zumindest eine Dreschtrommel aufweist, welcher der zumindest eine Variator zugeordnet ist.

Des Weiteren kann die Abscheidevorrichtung zumindest einen Axialrotor aufweisen, welchem der zumindest eine Variator zugeordnet ist.

Die vorliegende Erfindung wird nachstehend anhand eines in den Zeichnungen dargestellten Ausführungsbeispieles näher erläutert.

Es zeigen:
- Fig. 1: schematisch und exemplarisch eine Seitenansicht einer landwirtschaftlichen Arbeitsmaschine;
- Fig. 2: schematisch und exemplarisch eine perspektivische Teilansicht einer Antriebsanordnung der Arbeitsmaschine;
- Fig. 3: schematisch und exemplarisch eine Schnittansicht eines Abtriebspakets eines Variators gemäß Fig. 2 mit einer Auswuchtvorrichtung;
- Fig. 4: schematisch und exemplarisch eine isometrische Ansicht eines ringförmigen Bauteils der Auswuchtvorrichtung;
- Fig. 5: schematisch und exemplarisch eine Schnittansicht des Bauteils gemäß Fig. 4; und
- Fig. 6: schematisch und exemplarisch eine Schnittansicht eines Deckels der Auswuchtvorrichtung.

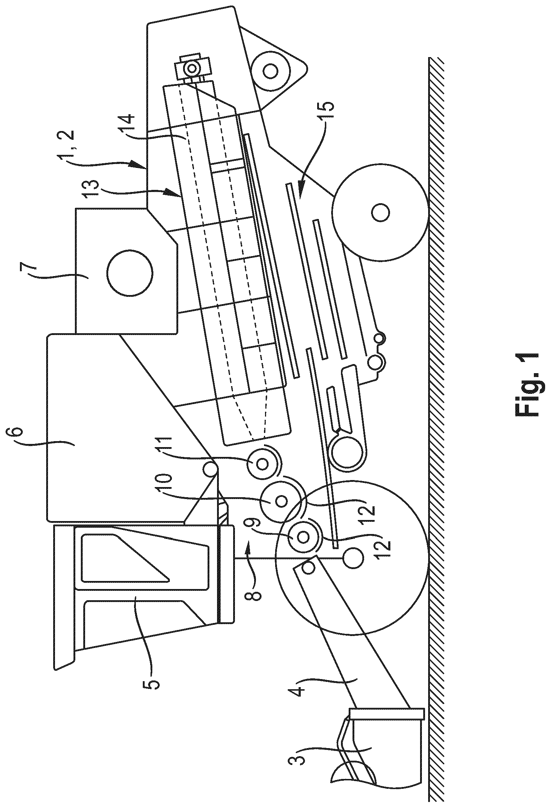

In Fig. 1 ist schematisch und exemplarisch eine Seitenansicht einer selbstfahrenden landwirtschaftlichen Arbeitsmaschine 1 dargestellt. Die Arbeitsmaschine 1 ist hier und vorzugsweise als Mähdrescher 2 ausgeführt. Der Mähdrescher 2 nimmt frontseitig ein am Schrägförderer 4 angeordnetes Vorsatzgerät 3 zur Aufnahme von Erntegut auf. Weiterhin weist der Mähdrescher 2 eine Kabine 5, einen hinter dieser liegenden Korntank 6 sowie anschließend an diesen einen Antriebsmotor 7 auf. Der Schrägförderer 4 führt das Erntegut einer Dreschvorrichtung 8 zu, welche hier und vorzugsweise als ein nach dem Tangentialflussprinzip arbeitendes Mehrtrommeldreschwerk ausgeführt ist. Die Dreschvorrichtung 8 besteht aus einer Vorbeschleunigungstrommel 9, einer Dreschtrommel 10 und einer Zuführtrommel 11. Den Trommeln 9 und 10 der Dreschvorrichtung 8 sind jeweils Abscheidekörbe 12 zugeordnet.

Der Dreschvorrichtung 8 ist eine Abscheidevorrichtung 13 nachgeordnet, welcher das im Wesentlichen ausgedroschene Erntegut zugeführt wird. Die Abscheidevorrichtung 13 weist zumindest einen Axialtrennrotor 14 auf, welcher noch im Erntegut enthaltene Kornbestandteile abscheidet. Ein von der Dreschvorrichtung 8 und der Abscheidevorrichtung 13 abgegebener Erntegutstrom gelangt zu einer Reinigungsvorrichtung 15.

Die Dreschvorrichtung 8 und die Abscheidevorrichtung 13 bilden Arbeitsorgane des Mähdreschers 2, welche durch eine Zugmitteltriebe umfassende Antriebsanordnung angetrieben sind. Die Zugmitteltriebe umfassende Antriebsanordnung ist vom Antriebsmotor 7 angetrieben.

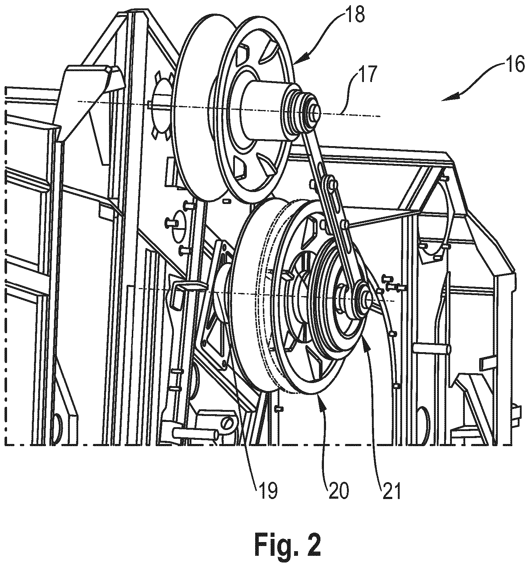

In Fig. 2 ist schematisch und exemplarisch eine perspektivische Teilansicht der Antriebsanordnung der Arbeitsmaschine 1 respektive des Mähdreschers 2 dargestellt. Die Antriebsanordnung umfasst zumindest einen Variator 16 zur stufenlosen Veränderung eines Übersetzungsverhältnisses. Der zumindest eine Variator 16 ist durch ein auf einer - strichliniert angedeuteten - Antriebswelle 17 angeordnetes Antriebspaket 18, ein auf einer - strichliniert angedeuteten - Abtriebswelle 19 angeordnetes Abtriebspaket 20 sowie einen das Antriebspaket 18 und das Abtriebspaket 20 umschlingenden - nicht dargestellten - Variatorriemen gebildet. Koaxial zur Abtriebswelle 19 ist eine ringförmige Auswuchtvorrichtung 21 angeordnet, die dem Variator 16 drehfest zugeordnet ist.

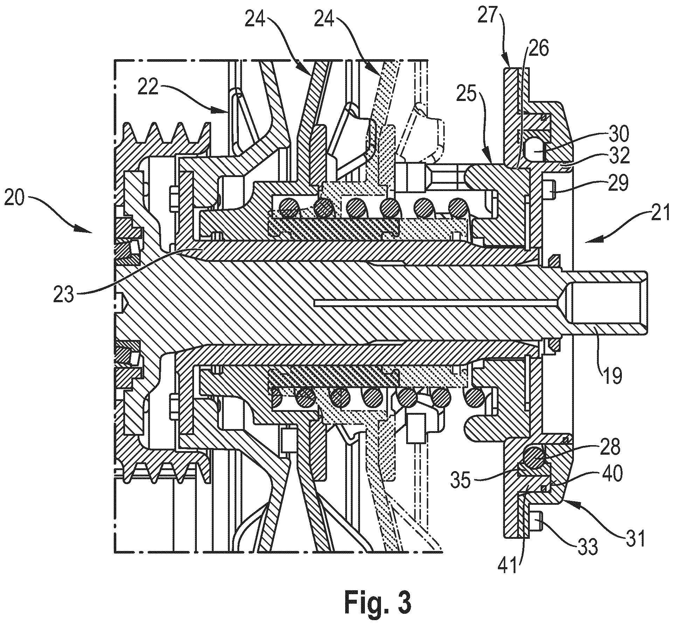

Die Darstellung in Fig. 3 zeigt schematisch und exemplarisch eine Schnittansicht des Abtriebspakets 20 des Variators 16 gemäß Fig. 2 mit der diesem zugeordneten Auswuchtvorrichtung 21. Das Abtriebspaket 20 umfasst eine Festscheibe 22. Die Festscheibe 22 ist an einem sich in axialer Richtung der Abtriebswelle 19 erstreckenden Nabenabschnitt 23 drehfest angeordnet. Weiter umfasst das Abtriebspaket 20 zumindest eine gegenüber der Festscheibe 22 axialverschiebbare Losscheibe 24. Die zumindest eine Losscheibe 24 ist auf dem Nabenabschnitt 23 angeordnet die in axialer Richtung verschiebbar. Der axiale Verstellweg der zumindest einen Losscheibe 24 ist durch eine endseitig auf der Abtriebswelle 19 angeordnete Einstellscheibe 25 einstellbar.

Die Auswuchtvorrichtung 21 ist auf der Einstellscheibe 25 des zumindest einen Variators 16 angeordnet. Hierzu weist die Einstellscheibe 25 einen umlaufenden radialen Absatz 26 auf. Mittels des radialen Absatzes 26 ist die Auswuchtvorrichtung 21 zentriert auf der Einstellscheibe 25 angeordnet.

Die Auswuchtvorrichtung 21 umfasst ein ringförmiges Bauteil 27 zur Befestigung auf der Einstellscheibe 25. Das ringförmige Bauteil 27 ist auf dem radialen Absatz 26 der Einstellscheibe 25 durch Formschluss zentrierend angeordnet. Das ringförmige Bauteil 27 ist durch Schraubverbindungen 29 drehfest mit der Einstellscheibe 25 verbunden.

Die Auswuchtvorrichtung 21 weist eine umlaufende ringförmige Kammer 30 auf, in der mindestens zwei kugelförmige Gewichte 28 relativbeweglich angeordnet sind. Die ringförmige Kammer 30 ist durch das ringförmige Bauteil 27 und einen Deckel 31 gebildet. Der Deckel 31 ist durch eine Schraubverbindung 33 mit dem ringförmigen Bauteil 27 drehfest verbunden. Der Deckel 31 ist ringförmig ausgeführt.

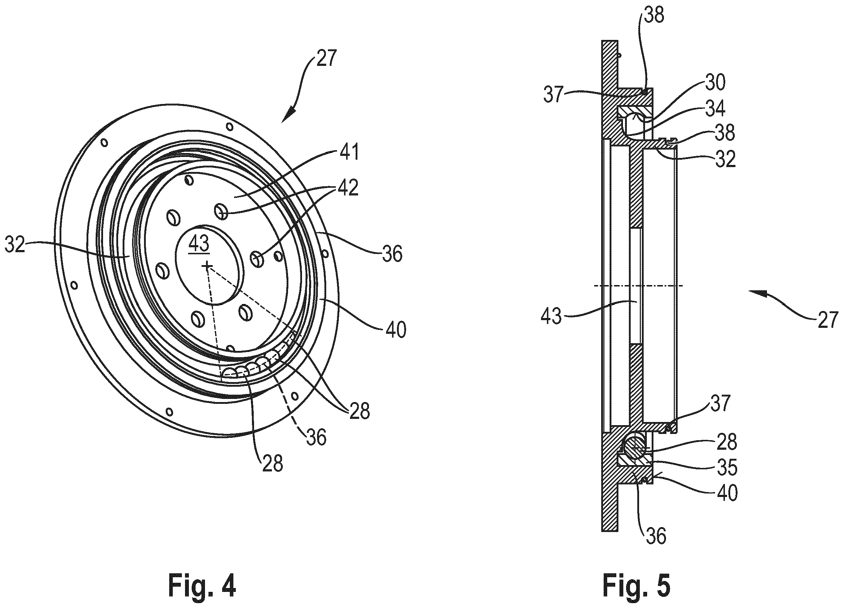

Das ringförmige Bauteil 27 weist einen flanschförmigen Abschnitt 32 auf, der sich koaxial zur Abtriebswelle 19 in axialer Richtung erstreckt. Auf dem flanschförmigen Abschnitt 32 ist ein zur Abtriebswelle 19 im Wesentlichen konkaver Laufbahnabschnitt 34 für die mindestens zwei kugelförmigen Gewichte 28 ausgebildet, wie in Fig. 5 dargestellt.

Die auf dem Laufbahnabschnitt 34 angeordneten kugelförmigen Gewichte 28 sind durch einen gegenüberliegend angeordneten Außenlagerring 35 geführt. Der Außenlagerring 35 ist durch Formschluss und/oder Stoffschluss am ringförmigen Bauteil 27 fixiert.

In Fig. 4 ist schematisch und exemplarisch eine isometrische Ansicht des ringförmigen Bauteils 27 der Auswuchtvorrichtung 21 dargestellt. Die Darstellung in Fig. 5 zeigt schematisch und exemplarisch eine Schnittansicht des ringförmigen Bauteils 27 gemäß Fig. 4.

Dabei ist in Fig. 4 beispielhaft die Anordnung von mehr als zwei Gewichten 28 gezeigt. Die Anzahl der Gewichte 28 ist dabei derart begrenzt, dass nebeneinanderliegende Gewichte 28 einen Kreisbogen 36 mit einer Länge beschreiben, der kleiner als die Hälfte des Umfangs der ringförmigen Kammer 30, vorzugsweise kleiner als ein Viertel des Umfangs der Kammer 30, ist.

Der auf dem flanschförmigen Abschnitt 32 ausgebildete Laufbahnabschnitt 34 des ringförmigen Bauteils 27 kann einen Teil eines Innenlagerrings ausbilden, welcher die kugelförmigen Gewichte 28 führt. Der gegenüberliegende Außenlagerring 35 ist an einem sich abschnittsweise in axialer Richtung erstreckenden Segment 36 des ringförmigen Bauteils 27 angeordnet.

Der flanschförmige Abschnitt 32 und das Segment 36 weisen jeweils eine ringförmige Nut 37 zur Aufnahme einer Dichtung 38 auf. Mittels der Dichtungen 38 wird die ringförmige Kammer 30 der Auswuchtvorrichtung 21 zwischen dem ringförmigen Bauteil 27 und dem Deckel 31 nach außen abgedichtet, um das Eindringen von Staub in die Kammer 30 zu verhindern.

Ein sich ausgehend vom flanschförmige Abschnitt 32 radial nach innen erstreckender Innenabschnitt 41 weist auf einer Kreisbahn verteilt angeordnete Durchbohrungen 42 auf, durch die Schrauben der Schraubverbindungen 29 hindurchführbar sind, um das ringförmige Bauteil 27 an der Einstellscheibe 25 zu befestigen. Der im Wesentlichen scheibenförmige Innenabschnitt 41 weist eine zur Abtriebswelle 19 koaxiale kreisförmige Öffnung 43 auf, welche den Nabenabschnitt 23 in Umfangsrichtung umschließt.

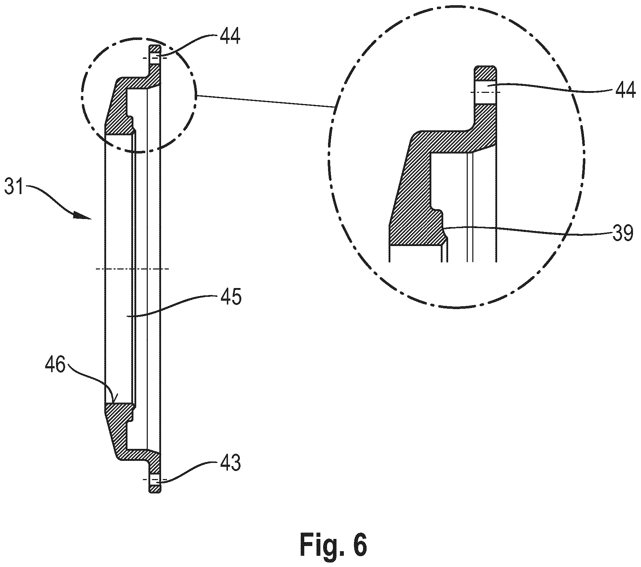

In Fig. 6 ist schematisch und exemplarisch eine Schnittansicht des Deckels 31 der Auswuchtvorrichtung 21 dargestellt. Der Deckel 31 weist innenseitig einen umlaufenden Laufbahnabschnitt 39 auf, welcher konkav ausgeführt ist. Der innenseitig angeordnete Laufbahnabschnitt 39 ist komplementär zum Laufbahnabschnitt 34 auf dem flanschförmigen Abschnitt 32 des ringförmigen Bauteils 27 angeordnet und ausgebildet. Der Laufbahnabschnitt 39 des Deckels 31 ergänzt den Laufbahnabschnitt 34 auf dem flanschförmigen Abschnitt 32 des ringförmigen Bauteils 27, so dass die kugelförmigen Gewichte 28 sowohl radial als auch axial in der sich ausbildenden ringförmigen Kammer 30 geführt sind.

Auf dem Umfang gleichmäßig verteilt angeordnete Durchbohrungen 44 im Außenrandbereich des Deckels 31 dienen der Hindurchführung von Schrauben der Schraubverbindungen 33. In montierter Position des ringförmigen Deckels 31 umschließt dieser den flanschförmigen Abschnitt 32 sowie das zum flanschförmigen Abschnitt 32 radial beabstandet ausgebildete kreisringförmige Segment 36 des ringförmigen Bauteils 27. Dabei stützt sich der Deckel 31 an einer axialen Stirnfläche 40 des kreisringförmigen Segments 36 ab.

Der Deckel 31 weist eine zur Abtriebswelle 19 koaxiale kreisförmige Öffnung 45 auf. Der Durchmesser der Öffnung 45 ist derart, dass der Deckel 31 mit einer radialen Stirnfläche 46 auf dem flanschförmigen Abschnitt 32 aufliegt.

**Bezugszeichenliste**

| | | | |
|---|---|---|---|
| 1 | Arbeitsmaschine | 34 | Laufbahnabschnitt |
| 2 | Mähdrescher | 35 | Außenlagerring |
| 3 | Vorsatzgerät | 36 | Kreisbogen |
| 4 | Schrägförderer | 37 | Ringförmige Nut |
| 5 | Kabine | 38 | Dichtung |
| 6 | Korntank | 39 | Laufbahnabschnitt |
| 7 | Antriebsmotor | 40 | Axiale Stirnfläche |
| 8 | Dreschvorrichtung | 41 | Innenabschnitt |
| 9 | Vorbeschleunigungstrommel | 42 | Durchbohrung |
| 10 | Dreschtrommel | 43 | Öffnung |
| 11 | Zuführtrommel | 44 | Durchbohrung |
| 12 | Abscheidekorb | 45 | Öffnung |
| 13 | Abscheidevorrichtung | 46 | Stirnfläche |
| 14 | Axialtrennrotor | | |
| 15 | Reinigungsvorrichtung | | |
| 16 | Variator | | |
| 17 | Antriebswelle | | |
| 18 | Antriebspaket | | |
| 19 | Abtriebswelle | | |
| 20 | Abtriebspaket | | |
| 21 | Auswuchtvorrichtung | | |
| 22 | Festscheibe | | |
| 23 | Nabenabschnitt | | |
| 24 | Losscheibe | | |
| 25 | Einstellscheibe | | |
| 26 | Radialer Absatz | | |
| 27 | Ringförmiges Bauteil | | |
| 28 | Kugelförmiges Gewicht | | |
| 29 | Schraubverbindung | | |
| 30 | Kammer | | |
| 31 | Deckel | | |
| 32 | Flanschförmiger Abschnitt | | |
| 33 | Schraubverbindung | | |

## Patentansprüche

1. Selbstfahrende landwirtschaftliche Arbeitsmaschine (1), die mehrere Arbeitsorgane (8, 13) aufweist, die durch eine Zugmitteltriebe umfassende Antriebsanordnung, die zumindest einen Variator (16) zur stufenlosen Veränderung eines Übersetzungsverhältnisses umfasst, angetrieben sind, wobei der zumindest eine Variator (16) durch ein auf einer Antriebswelle (17) angeordnetes Antriebspaket (18), ein auf einer Abtriebswelle (19) angeordnetes Abtriebspaket (20) sowie einen das Antriebspaket (18) und das Abtriebspaket (20) umschlingenden Variatorriemen gebildet ist, **dadurch gekennzeichnet, dass** dem zumindest einen Variator (16) eine ringförmige Auswuchtvorrichtung (21) drehfest zugeordnet ist, welche mindestens zwei kugelförmige, innerhalb der Auswuchtvorrichtung (21) auf einer Kreisbahn relativbewegliche Gewichte (28) umfasst.

2. Arbeitsmaschine (1) nach Anspruch 1, **dadurch gekennzeichnet, dass** die Auswuchtvorrichtung (21) am Abtriebspaket (20) des zumindest einen Variators (16) angeordnet ist.

3. Arbeitsmaschine (1) nach Anspruch 2, **dadurch gekennzeichnet, dass** das Abtriebspaket (20) eine auf der Abtriebswelle (19) angeordnete Festscheibe (22) und zumindest eine gegenüber der Festscheibe (22) axialverschiebbare Losscheibe (24) umfasst, deren axialer Verstellweg durch eine endseitig auf der Abtriebswelle (19) angeordnete Einstellscheibe (25) einstellbar ist.

4. Arbeitsmaschine (1) nach Anspruch 3, **dadurch gekennzeichnet, dass** die Auswuchtvorrichtung (21) auf der Einstellscheibe (25) des zumindest einen Variators (16) angeordnet ist.

5. Arbeitsmaschine (1) nach Anspruch 4, **dadurch gekennzeichnet, dass** die Einstellscheibe (25) einen umlaufenden radialen Absatz (26) aufweist, mittels dem die Auswuchtvorrichtung (21) zentriert auf der Einstellscheibe (25) angeordnet ist.

6. Arbeitsmaschine (1) nach einem der Ansprüche 1 bis 5, **dadurch gekennzeichnet, dass** die Auswuchtvorrichtung (21) eine umlaufende ringförmige Kammer (30) aufweist, in der die mindestens zwei kugelförmige Gewichte (28) relativbeweglich angeordnet sind.

7. Arbeitsmaschine (1) nach einem der Ansprüche 1 bis 6, **dadurch gekennzeichnet, dass** die Auswuchtvorrichtung (21) ein ringförmiges Bauteil (27) zur Befestigung auf der Einstellscheibe (25) umfasst, wobei das ringförmige Bauteil (27) einen flanschförmigen Abschnitt (32) aufweist, auf dem ein zur Abtriebswelle (19) konzentrischer Laufbahnabschnitt (34) für die mindestens zwei kugelförmigen Gewichte (28) ausgebildet ist.

8. Arbeitsmaschine (1) nach Anspruch 7, **dadurch gekennzeichnet, dass** die auf dem Laufbahnabschnitt (34) angeordneten kugelförmigen Gewichte (28) durch einen Außenlagerring (35) geführt sind, wobei der Außenlagerring (35) durch Formschluss und/oder Stoffschluss am ringförmigen Bauteil (27) fixiert ist.

9. Arbeitsmaschine (1) nach einem der Ansprüche 1 bis 8, **dadurch gekennzeichnet, dass** die Anzahl der Gewichte (28) derart begrenzt ist, dass nebeneinanderliegende Gewichte (28) einen Kreisbogen (36) mit einer Länge beschreiben, der kleiner als die Hälfte des Umfangs der ringförmigen Kammer (30), vorzugsweise kleiner als ein Viertel des Umfangs der Kammer (30), ist.

10. Arbeitsmaschine (1) nach einem der vorangehenden Ansprüche, **dadurch gekennzeichnet, dass** die Auswuchtvorrichtung (21) einen Deckel (31) umfasst, der mit dem ringförmigen Bauteil (27) lösbar verbunden ist.

11. Arbeitsmaschine (1) nach Anspruch 10, **dadurch gekennzeichnet, dass** der Deckel (31) innenseitig einen umlaufenden Laufbahnabschnitt (39) aufweist, welcher konkav ausgeführt ist.

12. Arbeitsmaschine (1) nach einem der vorangehenden Ansprüche, **dadurch gekennzeichnet, dass** diese als ein Mähdrescher (2) mit einer Dreschvorrichtung (8) und einer Abscheidevorrichtung (13) als Arbeitsorganen ausgeführt ist, wobei die Dreschvorrichtung (8) zumindest eine Dreschtrommel (10) aufweist, welcher der zumindest eine Variator (16) zugeordnet ist.

13. Arbeitsmaschine (1) nach Anspruch 12, **dadurch gekennzeichnet, dass** die Abscheidevorrichtung (13) zumindest einen Axialrotor (14) aufweist, welchem der zumindest eine Variator (16) zugeordnet ist.
